# EUROPEAN PATENT APPLICATION

(11) **EP 2 987 588 A1**
(43) Date of publication of application: **24.02.2016**
(21) Application number: 14855456.1
(22) Date of filing: 14.10.2014
(51) Int. Cl.: B23Q 11/00, B23C 3/00, B23C 9/00, B23Q 17/20

(54) **MACHINING DEVICE AND WORKPIECE MACHINING METHOD**

(30) Priority: 21.10.2013 JP 2013218566
(71) Applicant: Nakata Coating Co., Ltd., Yokohama-shi, Kanagawa 240-0041 (JP)
(72) Inventor: MATSUNO Takemi, Yokohama-shi Kanagawa 240-0041 (JP)
(74) Representative: MERH-IP Matias Erny Reichl Hoffmann Patentanwälte PartG mbB
(86) International application number: PCT/JP2014/077295
(87) International publication number: WO 2015/060154

(57) **Abstract**

There are provided a machining device that is excellent in an effect of cooling a machining tool and can perform machining with high accuracy and a machining method using the machining device.

There are provided a machining device that performs predetermined machining of a workpiece by a machining tool housed in a cylindrical body and a machining method using the machining device. The machining device includes a scatter-preventing member that is provided at a tip of the cylindrical body and comes into contact with the workpiece without a gap therebetween during the predetermined machining, a transfer passage that is provided on a side surface of the cylindrical body and sucks in waste of the workpiece produced due to the predetermined machining, and an air-blowing device that is provided on the side surface of the cylindrical body at a position symmetrical to the position of the transfer passage and blows air to at least a tip of the machining tool.

## Description

### TECHNICAL FIELD

The present invention relates to a machining device and a workpiece machining method using the machining device. Specifically, the present invention relates to a machining device of which a machining tool has a long life and which has high machining accuracy and high measurement accuracy for a workpiece, and a workpiece machining method using the machining device.

### BACKGROUND ART

In the past, an airbag-tear-line forming device for forming an airbag tear line, which is to be broken at the time of expansion of an airbag, with high accuracy in a short time has been proposed as a type of machining device (see Patent Document 1).

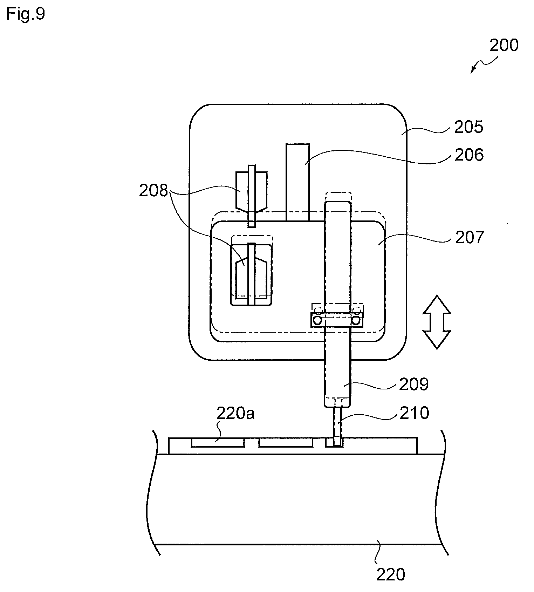

More specifically, as illustrated in Fig. 9, such an airbag-tear-line forming device 200 includes a tear line formation table on which a skin 220 on which a tear line 220a is to be formed is set, a cutting tool 210 that forms the tear line 220a and includes a spindle 209, an up-and-down moving plate 207 that includes a solenoid 208 for reciprocating the cutting tool 210 through a sliding mechanism 206 by a predetermined distance (0.5 to 3 mm), and a machining block 205 that allows the up-and-down moving plate 207 to move in three axis directions orthogonal to each other.

Further, a dust collection attachment for reliably collecting fine particles, which are generated during cutting and the like, at a low cost is proposed (see Patent Document 2).

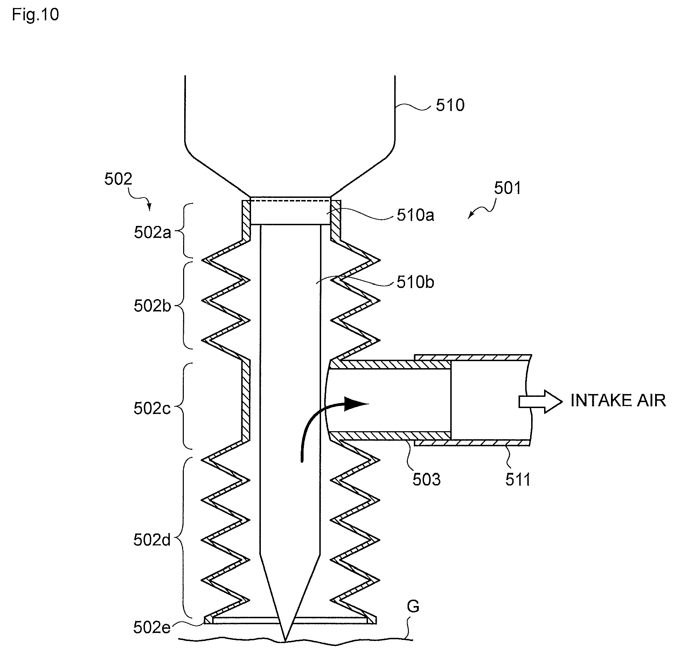

More specifically, as illustrated in Fig. 10, an dust collection attachment 501 includes: a cylindrical cover 502 that includes a plurality of bellows portions 502b and 502d, surrounds a hammer 510b of a chipping hammer 510, and generates negative pressure by the suction of air; and an intake pipe 503 that sucks the inside of the cover 502 and collects dust. The intake pipe 503 is connected to a portion of the cylindrical cover 502 between the plurality of bellows portions 502b and 502d.

In addition, the applicant of the invention already has proposed a machining device that includes a waste recovery device for recovering waste generated due to predetermined machining (see Patent Document 3).

More specifically, the machining device includes the waste recovery device. The waste recovery device includes a transfer passage that transfers waste by using an air flow, a moisture supply device that is provided on the transfer passage and performs antistatic treatment by supplying a predetermined amount of moisture to the waste, a cyclone that separates the waste subjected to the antistatic treatment, and a recovery tank that recovers the waste separated by the cyclone.

### CITATION LIST

### PATENT DOCUMENT

Patent Document 1: Japanese Patent No. 4382429 (claims, Fig. 4, and the like)
Patent Document 2: JP 2004-306212 A (claims, Fig. 2, and the like)
Patent Document 3: WO 2011-121853 A (claims, Fig. 1, and the like)

### DISCLOSURE OF THE INVENTION

### PROBLEM TO BE SOLVED BY THE INVENTION

However, the airbag-tear-line forming device 200 disclosed in Patent Document 1 does not include a recovery device for recovering waste generated due to cutting, and waste remaining on the tear line is not considered at all. That is, when the depth of the tear line (breaking groove) is measured by using an optical measuring device such as a laser displacement meter, waste lowers the measurement accuracy. For this reason, there is a problem in that it is difficult to accurately measure the depth of the tear line. Particularly, it is actually difficult to quickly measure the depth of the tear line with high accuracy and to adjust a cutting state during the feedback of the value of the depth due to a large amount of waste that is generated while cutting is performed.

Further, since the airbag-tear-line forming device 200 disclosed in Patent Document 1 is provided with the solenoid 208 for reciprocating the cutting tool by a predetermined distance (about 0.5 to 3 mm), the airbag-tear-line forming device can form linear cuts intermittently. However, since it takes the airbag-tear-line forming device 200 a long time to continuously form linear cuts, there is a problem in that manufacturing cost is increased.

Furthermore, the dust collection attachment 501 disclosed in Patent Document 2 intends to recover fine particles that are generated by the hammer 510b serving as a machining device, but predetermined antistatic treatment is not considered. Accordingly, even though a cyclone, a recovery tank, or the like is provided, the fine particles cannot be efficiently recovered since static electricity is generated.

Particularly, since a large amount of generated fine particles adhere to the inner wall of the cyclone, the recovery tank, or the like in a dry season in winter due to static electricity, it is difficult to efficiently take out the fine particles to the outside.

Moreover, since the entire cylindrical cover 502, which surrounds the hammer 510b, includes the bellows portions 502b and 502d made of rubber, the cylindrical cover 502 is easily deformed elastically not only in a vertical direction but also in a lateral direction. Accordingly, the cylindrical cover 502 easily comes into contact with the hammer 510b. As a result, there is also a problem in that it is difficult to perform machining with high accuracy.

In addition, according to the machining device including the waste recovery device disclosed in Patent Document 3, the recovery efficiency of waste having a predetermined size is very good but an influence of the generation of Joule heat from the machining tool under a predetermined environment is not considered.

For this reason, when the machining device is driven at high speed for a long time under a temperature condition where environmental temperature exceeds 40°C, more significantly 50°C, there is a problem in that the machining tool easily deteriorates.

Further, when the machining tool deteriorates, there is also a problem in that the machining accuracy of the workpiece significantly deteriorates.

In addition, since fine particles, which have an average particle size smaller than 100 µm and more significantly within the range of 0.1 to 10 µm, are likely to remain on a workpiece in some types of machining, the fine particles cause a measurement error of a machining depth.

Accordingly, the inventor completed the invention through earnest examination. According to the invention, there is provided a machining device that includes a machining tool housed in a cylindrical body. A scatter-preventing member and a transfer passage are provided on the cylindrical body, and an air-blowing device, which cools the machining tool, is provided on the side surface of the cylindrical body at a position substantially symmetrical to the position of the transfer passage. Accordingly, even though the machining device is driven at high speed for a long time under a temperature condition where environmental temperature exceeds 40°C, excellent machining accuracy and the high measurement accuracy of the sensor can be maintained without the deterioration of the machining tool.

That is, an object of the invention is to provide a machining device of which a machining tool has a long life and which has high machining accuracy and high measurement accuracy for a workpiece, and a workpiece machining method using the machining device.

### MEANS FOR SOLVING PROBLEM

According to the invention, there is provided a machining device that performs predetermined machining of a workpiece by a machining tool housed in a cylindrical body. The machining device includes: a scatter-preventing member that is provided at a tip of the cylindrical body and comes into contact with the workpiece without a gap therebetween during the predetermined machining; a transfer passage that is provided on a side surface of the cylindrical body and sucks in waste of the workpiece produced due to the predetermined machining; and an air-blowing device that is provided on the side surface of the cylindrical body at a position symmetrical to the position of the transfer passage and blows air to at least a tip of the machining tool. Accordingly, it is possible to solve the above-mentioned problems.

That is, according to the machining device of the invention, Joule heat, which is generated from the machining tool when the predetermined machining is performed, can be efficiently removed by air (high-speed air) that is blown from an air outlet of the air-blowing device.

As a result, even though the machining device is driven at high speed for a long time under a temperature condition where environmental temperature exceeds 40°C, excellent machining accuracy can be maintained without the shortening of the life of the machining tool.

Further, even though waste remaining on a predetermined machined portion, particularly, fine waste (foreign matters) having a particle size of 100 µm or less is present, the waste can be blown off by the high-speed air that is blown from the air outlet of the air-blowing device. Accordingly, it is possible to significantly improve the accuracy of the measurement of the thickness and the like using a sensor. In addition, it is also possible to improve the efficiency of recovery using a cyclone or the like.

Furthermore, the transfer passage and the air-blowing device are provided on the side surface of the cylindrical body at positions substantially symmetrical to each other with respect to the center line of the cylindrical body (corresponding to the center line M2 of the machining tool) (for example, the positions mean positions corresponding to the range of 180° ± 30° with respect to the center line of the cylindrical body when viewed from above, the same applies hereinafter). Accordingly, a concern about the interference between the transfer passage and the air-blowing device and the operation of the machining tool is reduced, and high-speed machining can be performed.

In addition, since the scatter-preventing member, which comes into contact with the workpiece without a gap therebetween during the predetermined machining, is provided at the tip of the cylindrical body, the scatter-preventing member can prevent waste from being scattered to the outside from a desired position and can also contribute to the change of the internal pressure of the cylindrical body into negative pressure.

Further, in the structure of the machining device of the invention, it is preferable that the height position of the transfer passage is higher than the height position of the air outlet.

When the machining device is adapted as described above in consideration of the height position, waste remaining on a predetermined machined portion can be blown off upward by high-speed air blown from the air outlet and can be more efficiently sucked by the transfer passage.

Furthermore, in the structure of the machining device of the invention, it is preferable that the pressure of the air is set to a value within the range of 500 to 50000 kPa (5 to 500 bar).

When the machining device is adapted as described above in consideration of the pressure of the air, it is possible to significantly improve an effect of cooling the machining tool by the high-speed air and the removal of waste remaining on a predetermined machined portion.

Moreover, in the structure of the machining device of the invention, it is preferable that the air outlet is provided at a tip of a syringe-shaped part extending from the outside of the cylindrical body to the inside thereof and a distance between the air outlet and the tip of the machining tool is variable.

When the machining device is adapted as described above in consideration of the air outlet, it is possible to significantly improve an effect of cooling the machining tool by the high-speed air and the removal of waste remaining on a predetermined machined portion.

In addition, it is possible to significantly improve an effect of cooling the machining tool by the high-speed air and the removal of waste remaining on a predetermined machined portion, regardless of the form of the workpiece.

Further, in the structure of the machining device of the invention, it is preferable that the cylindrical body and the transfer passage are made of a titanium compound (also including titanium metal) as a main ingredient.

When the machining device is adapted as described above in consideration of the materials of the cylindrical body and the transfer passage, it is possible to provide a machining device that is light as a whole, has a low charging property, and is excellent in workability.

Furthermore, in the structure of the machining device of the invention, it is preferable that the scatter-preventing member is made of a resin containing an antistatic agent.

When the machining device is adapted as described above in consideration of the material of the scatter-preventing member, it is possible to effectively prevent a phenomenon in which fine waste easily adheres to the inner surface of the scatter-preventing member since it is possible to effectively prevent the frictional charging of the scatter-preventing member.

Moreover, in the structure of the machining device of the invention, it is preferable that the machining tool is mounted on a robot arm that changes a horizontal position and a vertical position while driving the machining tool, and a sensor, which measures a machining depth formed by the machining tool, is mounted on the robot arm.

When the machining device is adapted to be provided with the robot arm as a drive unit and the predetermined sensor (an optical sensor or the like) as described above, the handleability of the machining device is significantly improved and the machining device can perform predetermined machining at high speed and with high accuracy.

Further, according to another aspect of the invention, there is provided a workpiece machining method using a machining device that performs predetermined machining of a workpiece by a machining tool housed in a cylindrical body. The machining device includes a scatter-preventing member that is provided at a tip of the cylindrical body and comes into contact with the workpiece without a gap therebetween during the predetermined machining, a transfer passage that is provided on a side surface of the cylindrical body and sucks in waste of the workpiece produced due to the predetermined machining, and an air-blowing device that is provided on the side surface of the cylindrical body at a position symmetrical to the position of the transfer passage and blows air to at least a tip of the machining tool. The workpiece machining method includes the following steps (1) and (2).
(1) A step of machining the workpiece by using the machining device while blowing air to at least the tip of the machining tool from the air-blowing device, and sucking and removing the waste through the transfer passage(suction passage)
(2) A step of measuring a machining depth of the workpiece, which is machined by the machining tool, by a sensor

That is, according to the workpiece machining method of the invention, Joule heat, which is generated from the machining tool when the predetermined machining is performed, can be efficiently removed by air (high-speed air) that is blown from an air outlet of the air-blowing device.

As a result, even though the machining device is driven at high speed for a long time under a temperature condition where environmental temperature exceeds 40°C, excellent machining accuracy can be maintained without the shortening of the life of the machining tool.

Further, even though waste remaining on a predetermined machined portion, particularly, fine waste (foreign matters) having a particle size of 100 µm or less is present, the waste can be blown off by the high-speed air that is blown from the air outlet of the air-blowing device. Accordingly, it is possible to significantly improve the accuracy of the measurement of the thickness and the like using the sensor. In addition, it is also possible to improve the efficiency of recovery using a cyclone or the like.

Furthermore, the transfer passage and the air-blowing device are provided on the side surface of the cylindrical body at positions substantially symmetrical to each other with respect to the central position of the cylindrical body (corresponding to the center line M2 of the machining tool). Accordingly, a concern about the interference between the transfer passage and the air-blowing device and the operation of the machining tool is reduced, and high-speed machining can be performed.

In addition, since the scatter-preventing member, which comes into contact with the workpiece without a gap therebetween during the predetermined machining, is provided at the tip of the cylindrical body, the scatter-preventing member can prevent waste from being scattered to the outside from a desired position and can also contribute to the change of the internal pressure of the cylindrical body into negative pressure.

### BRIEF DESCRIPTION OF DRAWINGS

Fig. 1 is a schematic diagram illustrating a machining device of the invention;
Fig. 2 is a schematic diagram illustrating a waste recovery device that is connected to the machining device of the invention;
Fig. 3 is a diagram illustrating a relationship between the machining device of the invention and the waste recovery device connected to the machining device;
Figs. 4(a) and 4(b) are diagrams schematically illustrating the operation of the machining device that includes a cutting device (end mill) and a cut-off device (ultrasonic cutter);
Figs. 5(a) and 5(b) are diagrams illustrating the aspects of an airbag device;
Fig. 6 is a diagram illustrating the outline of an airbag-breaking-groove forming device;
Fig. 7 is a diagram illustrating the state of an airbag board on which a tear line of Example 1 is formed;
Fig. 8(a) is a diagram illustrating the state of the airbag board on which the tear line of Example 1 is formed, and Fig. 8(b) is a diagram illustrating the state of an airbag board on which a tear line of Comparative example 1 is formed;
Fig. 9 is a diagram illustrating an airbag-tear-line forming device in the related art; and
Fig. 10 is a diagram illustrating a dust collection attachment in the related art.

### BEST MODES FOR CARRYING OUT THE INVENTION

### [First embodiment]

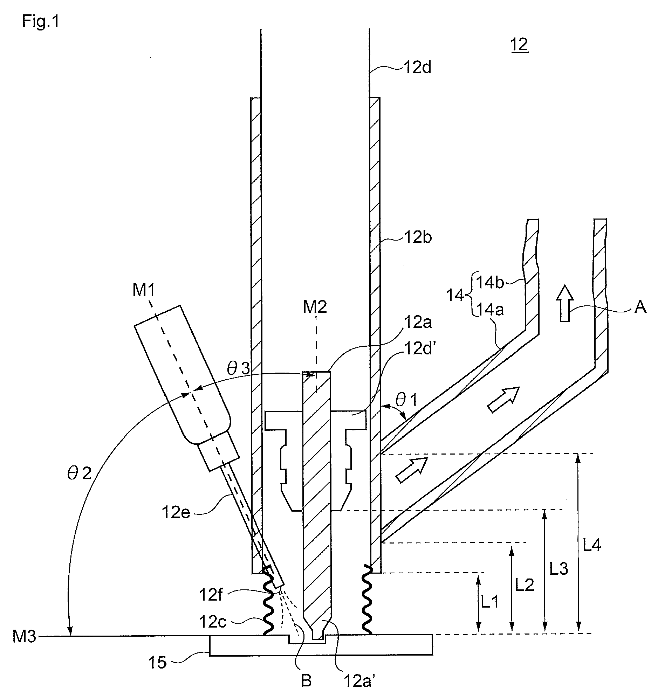

A first embodiment is a machining device 12 that performs predetermined machining of a workpiece 15 by a machining tool 12a housed in a cylindrical body 12b as illustrated in Fig. 1. In the machining device 12, a scatter-preventing member 12c coming into contact with the workpiece 15 without a gap therebetween during the predetermined machining is provided at the tip of the cylindrical body 12b, a transfer passage 14 for sucking in the waste of the workpiece 15 produced due to the predetermined machining is provided on a side surface of the cylindrical body 12b, and an air-blowing device 12e for blowing air to at least the tip of the machining tool 12a is provided on the side surface of the cylindrical body 12b at a position symmetrical to the position of the transfer passage 14.

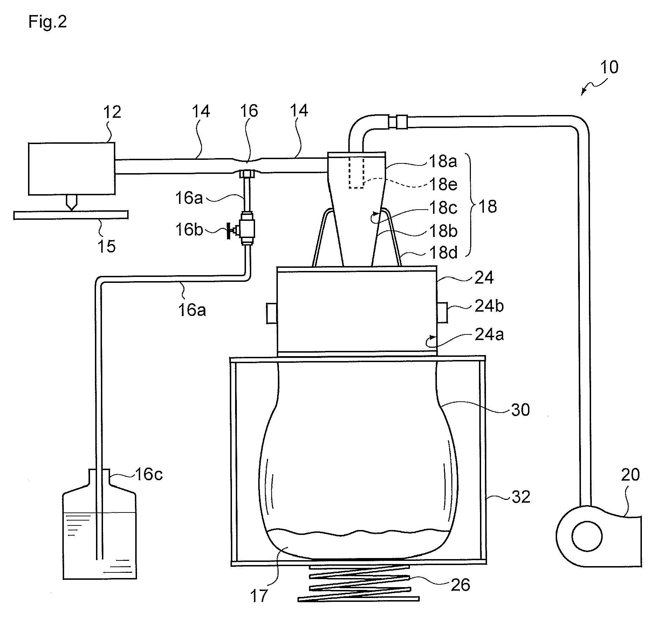

Meanwhile, Fig. 1 is a schematic diagram of the machining device 12 and Fig. 2 is a schematic diagram illustrating a waste recovery device 10 that is connected to the transfer passage 14 of the machining device 12.

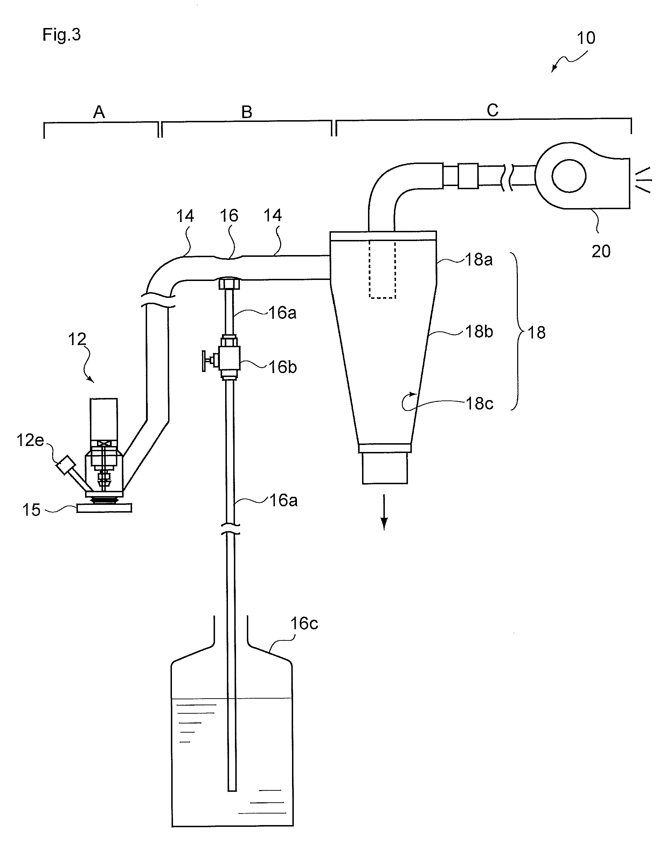

Fig. 3 further illustrates a relationship between the machining device 12 and the waste recovery device 10 connected to the machining device 12. In Fig. 3, reference character A denotes a mechanical processing section for performing predetermined machining, reference character B denotes a charge processing section for performing predetermined charge processing of waste, and reference character C denotes a recovery section for recovering waste.

The machining device of the first embodiment will be described using a case, in which an airbag-breaking-groove forming device for forming an airbag breaking groove (tear line) on an automotive interior member (airbag door member) is mainly assumed as the machining device provided in the mechanical processing section A, as an example.

### 1. Machining device

### (1) Type

As long as the machining device generates waste by performing predetermined machining, the type of the machining device (including the machining tool) 12 illustrated in Fig. 1 or 3 is not particularly limited. For example, the machining device may be at least one of a cutting device, a polishing device, a cut-off device, a boring device, and the like or a combination of these devices and an inspection device, a deposition device, a painting device, a heating device, or the like as other mechanical equipment.

Here, examples of the cutting device includes an end mill, a vibration cutting device (including a ultrasonic vibration cutting device, an elliptical vibration cutting device, and the like), a rotating-shaft cutting device, and the like. Particularly, a solid end mill, which includes an end cutting edge at the tip thereof and includes side cutting edges on the side thereof, is the best as a cutting tool. Further, examples of the polishing device include a bit, a grinder, a blast, a file, and the like. Furthermore, examples of the cut-off device include an ultrasonic cutter, a laser cutter, a heat-melting blade, and the like. In addition, examples of the boring device include a drill (including a high-frequency ultrasonic drill), a reamer, a tap, and the like.

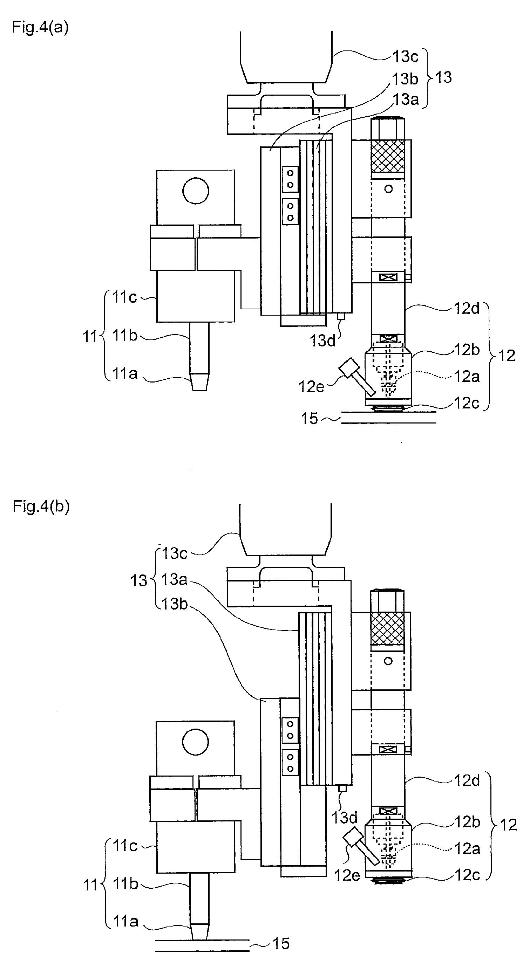

Accordingly, for example, when the machining device is an airbag-breaking-groove forming device, the machining device is provided with an end mill 12a as a cutting device and an ultrasonic cutter 11 as a cut-off device as illustrated in Figs. 4(a) and 4(b). Therefore, both or one of the end mill 12a and the ultrasonic cutter 11 can be used according to the type of a workpiece, the purpose of use, or the like.

More specifically, it is also possible to continuously form an airbag breaking groove, which has a rectangular cross-sectional shape, on the workpiece 15 by using the end mill 12a as illustrated in Fig. 4(a). In addition, it is also possible to indirectly form a plurality of portions, which are to be cut off, on the bottom of the airbag breaking groove, which is formed by the end mill 12a and has a rectangular cross-sectional shape, at predetermined intervals or to directly form a plurality of portions, which are to be cut off, on the workpiece 15 at predetermined intervals by using the ultrasonic cutter 11 as illustrated in Fig. 4(b).

Meanwhile, Fig. 4(a) illustrates a state in which the end mill 12a is mounted on a robot arm, and more specifically, a position control device 13 (13a, 13b, 13c), which operates in a vertical direction and a rotation direction, that is, performs positioning in a so-called three-dimensional direction, is provided.

Accordingly, since the end mill 12a is adapted to be capable of being moved down to a position below a predetermined position by a cylinder 12d that is lined up with the position control device 13 or the like, the end mill 12a can be in a machining state in which the end mill 12a continuously forms the airbag breaking groove on the workpiece 15.

Further, the ultrasonic cutter 11, which is provided on the side of the position control device 13 opposite to the end mill 12a, is adapted to be capable of being moved to a position above a predetermined position, and is adapted not to hinder the operation of the end mill 12a.

Meanwhile, Fig. 4(b) illustrates a machining state in which the ultrasonic cutter 11 (11a, 11b, 11c) is moved down to a position below a predetermined position by the position control device 13 and continuously forms an airbag breaking groove on the workpiece 15.

Meanwhile, the ultrasonic cutter 11 includes a tip 11a, a shaft 11b, and an ultrasonic vibration device 11c.

Further, the end mill 12a, which is provided on the side of the position control device 13 opposite to the ultrasonic cutter 11, is lifted to a position above the predetermined position and is adapted not to hinder the operation of the ultrasonic cutter 11.

Furthermore, it is preferable to selectively use the types of machining devices, such as a cutting device, a polishing device, a cut-off device, and a boring device, according to the aspect of a workpiece.

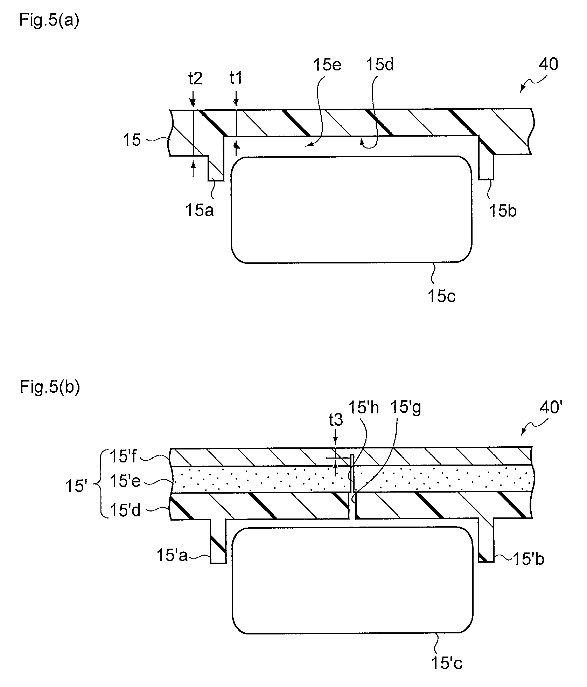

That is, when an airbag door member 40 includes a base 15 that is made of a polypropylene resin (hard polypropylene resin), an ABS resin, or the like and has a single-layer structure as illustrated in Fig. 5(a), it is possible to suck and remove waste, which is to be generated, while forming an airbag breaking groove 15d, which forms a substantially continuous line, on the base 15 by using only the cutting device (end mill).

Moreover, as illustrated in Figs. 4(a) and 4(b), it is possible to adjust the depth of the breaking groove of the workpiece 15, which is the base, within a predetermined range through the on-line monitoring of the machining state (the depth of a breaking groove or the like) of the workpiece 15, which is the base, using a laser displacement meter 13d (for example, LKG5000 series manufactured by KEYENCE Corporation) as a sensor and the feed-back of the machining state.

Accordingly, even though a continuous line is formed by the end mill as described above while the number of times of the up and down movement of the end mill is made extremely small, the airbag breaking groove can be quickly formed with high accuracy.

As a result, as illustrated in Fig. 5(a), it is possible to very inexpensively and efficiently manufacture the airbag door member 40 that includes an airbag 15c, an airbag housing portion 15e formed by a plurality of protrusions 15a and 15b, and the base 15 having a predetermined depth (t1) as the depth of a breaking groove 15d.

Further, according to the invention, the cylindrical body is provided with the scatter-preventing member and the transfer passage and the air-blowing device for cooling the machining tool is provided on the side surface of the cylindrical body at a position substantially symmetrical to the position of the transfer passage. Accordingly, even though the machining device is driven at high speed for a long time under a temperature condition where environmental temperature exceeds 40°C, excellent machining accuracy and the high measurement accuracy of the sensor can be maintained without the deterioration of the machining tool.

### (2) Airbag-breaking-groove forming device

### (2)-1 Basic aspect

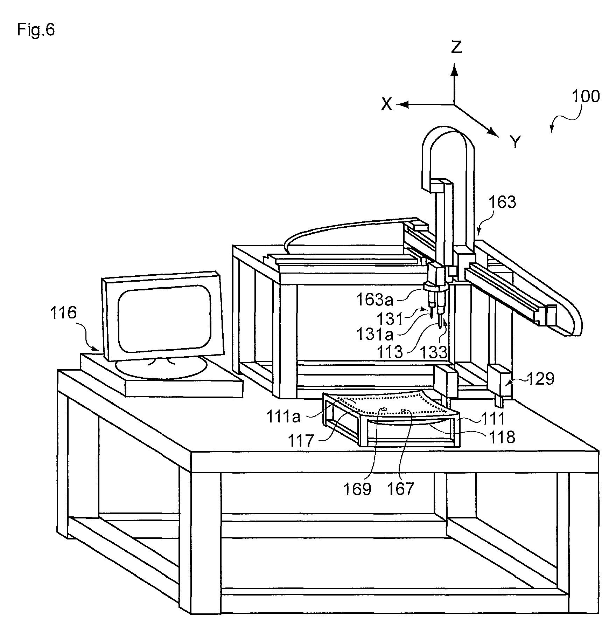

Furthermore, when the machining device is an airbag-breaking-groove forming device, the airbag-breaking-groove forming device 100 includes a support table 111 on which the automotive interior member (airbag door member) is placed as illustrated in Fig. 6 as a basic aspect.

Moreover, the airbag-breaking-groove forming device 100 is provided with primary-break-line forming means 131 for forming a primary break line (for example, a breaking groove having a predetermined width and a predetermined depth) on the automotive interior member placed on the support table 111 and secondary-break-line forming means 133 for forming a secondary break line (for example, a slit line having a predetermined depth) on the automotive interior member.

Further, as mechanical-blade detecting means, a first machining-blade detecting means 167 and second machining-blade detecting means 169, which are mounted on the primary-break-line forming means 131 and the secondary-break-line forming means 133, are provided on the back of a placement surface 111a. Furthermore, generally, each of the first machining-blade detecting means 167 and the second machining-blade detecting means 169 is an optical measuring device such as a laser displacement meter when a blade is detected from the surface of the workpiece, and is an electromagnetic induction measuring device such as an eddy current type film pressure meter when a blade is detected from the back of the workpiece.

Moreover, the airbag-breaking-groove forming device 100 includes a control unit (computer control unit) 116 that accurately perform a detection operation and the like in addition to the positioning or machining operations of various primary-break-line forming means and secondary-break-line forming means.

However, in some aspects of the airbag door member, any one of the primary-break-line forming means and the secondary-break-line forming means may be provided as described above or tertiary-break-line forming means may be provided in addition to both the primary-break-line forming means and the secondary-break-line forming means.

### (2)-2 Support table

Further, the airbag-breaking-groove forming device 100 includes the support table 111 where the automotive interior member is placed and fixed when forming an airbag breaking groove.

Furthermore, the placement surface 111a of the support table 111 is provided with a plurality of suction holes 117, and is provided with a suction device 118 that sucks and fixes the automotive interior member placed on the placement surface 111a through the suction holes 117.

For example, a vacuum pump or the like can be used as the suction device 118. Since the airbag-breaking-groove forming device 100 includes the suction device 118 as described above, it is possible to easily fix an automotive interior member onto the support table 111 even though the automotive interior member has a complicated shape or a large size.

Accordingly, it is possible to prevent the positional deviation of the automotive interior member or the variation of the thickness of a remaining portion of the airbag breaking groove during the formation of the airbag breaking groove, and to form the airbag breaking groove with high accuracy.

Further, when a vacuum pump or the like is used, it is possible to easily switch whether or not the automotive interior member is fixed according to the on/off of the operation of the suction device 118 unlike mechanical fixing means. Accordingly, it is possible to quickly perform work.

### (2)-3 Break-line forming means

Furthermore, at least one machining tool 12a is provided as the break-line forming means as illustrated in Fig. 1.

For example, at least one of an end mill, a heat-melting blade, an ultrasonic cutter, a laser cutter, and the like can be suitably used as the machining tool.

That is, when these machining tools are used, Joule heat can be efficiently removed by air (high-speed air) blown from an air outlet of the air-blowing device even though the temperature of the machining tool becomes high while these machining tools are used for a long time.

As a result, even though the machining device is driven at high speed for a long time under a temperature condition where environmental temperature exceeds 40°C, the life of the machining tool is not shortened and excellent machining accuracy can be maintained.

Further, even though waste remaining on a predetermined machined portion, particularly, fine waste (foreign matters) having a particle size of 100 µm or less is present when these machining tools are used, the waste can be blown off by high-speed air that is blown from the air outlet of the air-blowing device.

Accordingly, it is possible to significantly improve the accuracy of the measurement of thickness and the like using a sensor. In addition, it is also possible to improve the efficiency of recovery using a cyclone or the like.

Furthermore, it is also preferable that the primary-break-line forming means 131 and the secondary-break-line forming means 133 are provided as the break-line forming means as illustrated in Fig. 6.

Here, when a workpiece is a vehicular interior member (airbag door part) formed of only a hard workpiece 15 as illustrated in Fig. 5(a), the primary-break-line forming means 131 is machining means (primary-break-line forming means) for forming an airbag break groove 15d, which is formed by cutting a part of the workpiece from the back of the workpiece 15 having a predetermined thickness (t2) but has a predetermined thickness (t1) without reaching the surface of the workpiece.

The predetermined thickness (t2) of the workpiece 15 is generally within the range of 1.0 to 2.5 mm and the predetermined thickness (t1) of a portion of the workpiece, which remains without reaching the surface of the workpiece, is a value generally within the range of 0.1 to 0.8 mm. However, the predetermined thickness (t1) is more preferably set to a value within the range of 0.2 to 0.7 mm, and is still more preferably set to a value within the range of 0.3 to 0.6 mm.

Meanwhile, when the workpiece 15 is a workpiece 15' having a three-layer structure including a hard base 15'd, an intermediate layer (foam layer) 15'e, and a skin 15'f as illustrated in Fig. 5(b), the primary-break-line forming means is machining means for forming a primary break line that passes through the hard base 15'd from the hard workpiece 15'd and has a depth not reaching the skin 15'f.

A predetermined thickness (t3) of a portion of the workpiece, which remains without reaching the surface of the workpiece, is generally within the range of 0.1 to 0.8 mm. However, the predetermined thickness (t3) is more preferably set to a value within the range of 0.2 to 0.7 mm and is still more preferably set to a value within the range of 0.3 to 0.6 mm.

Further, an end mill, a heat-melting blade, an ultrasonic cutter, a laser cutter, or the like can be suitably used as the primary-break-line forming means.

Meanwhile, the airbag-breaking-groove forming device 100 illustrated in Fig. 6 is provided with the secondary-break-line forming means 133 as machining means for forming a secondary break line (thickness t3), which reaches the skin 15'f, by allowing a machining tool (which may be referred to as a machining blade) 113 to enter the primary break line.

Accordingly, the machining tool (an ultrasonic cutter or the like) 113 included in the secondary-break-line forming means 133 is formed in the shape of a long and thin plate as a whole so as to be capable of entering the primary break line that is formed by the machining tool (an end mill or the like) included by the primary-break-line forming means 131.

Further, the primary-break-line forming means 131 and the secondary-break-line forming means 133 of the airbag-breaking-groove forming device 100 are fixed to a fixing portion 163a of break-line forming means of a movement control robot 163.

Accordingly, when the primary break line is to be formed, the movement control robot 163 operates and a predetermined cut-off operation is performed while the movement control robot 163 positions the primary-break-line forming means 131 so that the hard base 15'd can be cut off by the primary-break-line forming means 131.

Then, when the secondary break line is to be formed, a predetermined cut-off operation is performed in a state in which the skin 15'f can be cut off by the secondary-break-line forming means 133.

### (2)-4 Air-blowing device

Further, as illustrated in Fig. 1, a predetermined air-blowing device 12e is provided at a predetermined position as means for cooling the machining blade.

The reason for this is that Joule heat generated from the machining tool may be efficiently removed by air B (high-speed air) blown from an air outlet 12f of the air-blowing device 12e.

As a result, even though the machining device is driven at high speed for a long time under a temperature condition where environmental temperature exceeds 40°C, a cooling effect is obtained. Accordingly, excellent machining accuracy can be maintained without the shortening of the life of the machining tool.

Furthermore, even though waste remaining on a predetermined machined portion, particularly, fine waste (foreign matters) having a particle size of 100 µm or less is present, the waste can be blown off by the air B that is blown from the air outlet 12f of the air-blowing device 12e.

Accordingly, it is possible to significantly improve the accuracy of the measurement of the thickness or width of a machined portion using a laser displacement meter or the like. In addition, since it is also possible to recover fine waste by using a cyclone or the like, it is also possible to further improve the efficiency of recovery.

Here, the pressure of air at the air outlet 12f of the air-blowing device 12e is preferably set to a value within the range of 500 to 50000 kPa (5 to 500 bar).

The reason for this is that an effect of cooling the machining tool by high-speed air and the removal of waste remaining on a predetermined machined portion may be significantly improved when the pressure of air is in the above-mentioned range.

More specifically, when the pressure of air has a value lower than 500 kPa, an effect of cooling the machining tool is likely to become insufficient.

Meanwhile, since the internal pressure of the cylindrical body 12b becomes excessive when the pressure of air has a value exceeding 50000 kPa, the recovery rate of waste, which is moved in a direction of an arrow A by the transfer passage 14, is reduced or adhesion between the workpiece 15 and the scatter-preventing member 12c is reduced during the machining. Accordingly, there is a case in which air or fine waste is likely to leak to the outside.

Therefore, the pressure of air at the air outlet 12f is more preferably set to a value within the range of 800 to 30000 kPa and is still more preferably set to a value within the range of 1000 to 15000 kPa.

Further, as illustrated in Fig. 1, the air outlet 12f of the air-blowing device 12e is formed at the tip of a syringe-shaped part that extends obliquely downward from the outside of the cylindrical body to the inside thereof so as to pass through the side wall of the cylindrical body 12b, and it is preferable that a distance between the air outlet 12f and the tip of the machining tool 12a is variable.

The reason for this is that the distance between the air outlet 12f and a tip 12a' of the machining tool 12a may be changed when an environmental condition or the form of the workpiece 15 is changed considering the form of the air-blowing device 12e.

Accordingly, even though environmental ambient temperature is excessively high or even though the form of the workpiece 15 has a difference in level or unevenness, it is possible to further improve an effect of cooling the machining tool by air B and the removal of waste remaining on a predetermined machined portion by changing the distance between the air outlet 12f and the tip 12a' of the machining tool 12a.

Further, in regard to the air-blowing device 12e, it is preferable that linear distances between the surface of the workpiece 15 and the height positions (L2 and L4) of the transfer passage 14 are set to be longer than a linear distance between the surface of the workpiece 15 and the height position (L1) of the air outlet 12f of the air-blowing device 12e.

The reason for this is that waste remaining on a predetermined machined portion may be intensively blown off upward by the air B blown from the air outlet 12f when the air-blowing device 12e is adapted in consideration of the height positions (L1, L2, and L4). Furthermore, the waste, which is blown off upward, is sucked from a suction port provided on the relatively upper side, and can be further efficiently recovered by a cyclone 18 or the like through the transfer passage 14 that includes a tube 14a extending obliquely upward and a vertical tube 14b connected to the tube 14a.

Moreover, it is also preferable that not only the pressure and velocity of air but also the height position (L1) of the air outlet is considered to allow the air B for cooling to sufficiently and efficiently come into contact with the tip position 12a' of the machining tool 12a and to prevent an influence of a chuck 12d' holding the machining tool.

Accordingly, it is preferable that the position (L3) of the chuck 12d' for the machining tool 12a from the surface of the workpiece 15 is higher than the height position (L1) of the air outlet 12f from the surface of the workpiece 15 and the position (L3) of the chuck 12d' for the machining tool 12a is determined so as to be positioned between the lower limit height position (L2) of the transfer passage 14 from the surface of the workpiece 15 and the upper limit height position (L4) of the transfer passage 14.

Further, an angle (θ3) between a virtual center line (M1) of the air-blowing device 12e, which is mounted on the side surface of the cylindrical body 12b, and a virtual center line (M2) of the machining tool 12a is preferably set to a value within the range of 10 to 60° as illustrated in Fig. 1.

The reason for this is that it may be difficult to mount the air-blowing device 12e on the side surface of the cylindrical body 12b and it may also be difficult for the air B for cooling to sufficiently and efficiently come into contact with the machining tool 12a when the angle is set to a value smaller than 10°.

Furthermore, the reason for this is that it may be difficult to mount the air-blowing device 12e on the side surface of the cylindrical body 12b and it may also be difficult for the air B for cooling to sufficiently and efficiently come into contact with the machining tool 12a when the angle exceeds 60°.

Accordingly, the angle between the virtual center line (M1) of the air-blowing device 12e and the virtual center line (M2) of the machining tool 12a is more preferably set to a value within the range of 15 to 55° and is still more preferably set to a value within the range of 20 to 45°.

Meanwhile, a case in which an angle (θ2) between the virtual center line (M1) of the air-blowing device 12e, which is mounted on the side surface of the cylindrical body 12b, and a virtual line (M3) indicating the position of the surface of the workpiece 15 is 65° is illustrated in Fig. 1 as one example. However, the angle is preferably set to a value within the range of 30 to 80°, is more preferably set to a value within the range of 35 to 75°, and is still more preferably set to a value within the range of 45 to 70°.

Further, in regard to the air-blowing device 12e, it is preferable that the scatter-preventing member is made of a resin containing an antistatic agent.

The reason for this is that it may be possible to effectively prevent the frictional charging of the scatter-preventing member and to effectively prevent a phenomenon in which fine waste easily adheres to the inner surface of the scatter-preventing member.

More specifically, the scatter-preventing member, which has the shape of a bellows as illustrated in Fig. 1, is made of a material that contains an olefin resin, a polyester resin, a polycarbonate resin, a synthetic rubber, a thermoplastic elastomer, or the like as a main ingredient. Preferably 0.1 to 50 parts by weight of an antistatic agent (including an auxiliary antistatic agent), such as carbon particles, carbon fiber, aramid fiber, metal particles, or semiconductor particles, is mixed with 100 parts by weight of the main ingredient; more preferably 1 to 40 parts by weight of the antistatic agent is mixed with 100 parts by weight of the main ingredient; and still more preferably 10 to 30 parts by weight of the antistatic agent is mixed with 100 parts by weight of the main ingredient.

### (2)-4 Machining-blade detecting means

Further, it is preferable that the airbag-breaking-groove forming device 100 is provided with an optical measuring device (a laser-reflection-type laser displacement meter or the like) for measuring the depth of the primary break line on time in order to adjust the depth of a groove to be formed, that is, the thickness of the remaining portion of the base, through the control of the position of the blade edge of a machining tool 131a that forms a part of the primary-break-line forming means 131.

Meanwhile, it is preferable that the first machining-blade detecting means 167 and the second machining-blade detecting means 169, which detect the position of the blade edge of a machining tool forming a part of the secondary-break-line forming means 133, are provided below the support table 111.

The first machining-blade detecting means 167 and the second machining-blade detecting means 169 are disposed in the support table 111, and are adapted to detect the presence or absence of the machining tool at a preset specific detection position.

Furthermore, for example, metal detectors are suitable as the first machining-blade detecting means 167 and the second machining-blade detecting means 169, and the presence or absence of the machining tool can be detected by the metal detectors when a machining tool made of metal passes through the detection position.

### (2)-5 Blade-edge-state detecting means

Further, blade-edge-state detecting means 129 is means for detecting the state of the wear or damage of the blade edge of the machining tool (machining blade).

That is, the state of the blade edge of the machining blade is measured. When a state in which the blade edge is damaged due to wear and the like is detected, the operation of the device is stopped and the machining blade can also be replaced. Accordingly, the thickness of the remaining portion of an airbag breaking groove to be formed can be accurately adjusted.

Specifically, the blade-edge-state detecting means is formed of a laser displacement meter, an infrared measurement device, or the like. When the machining blade is disposed at a detection position of the blade-edge-state detecting means 129 while the tip of the movement control robot 163 is maintained at a predetermined height that is prescribed, the blade-edge-state detecting means can detect the degree of damage, which is caused by wear and the like, by measuring a difference in the height position of the blade edge or a difference in the shape of shade between before and after the formation of the airbag breaking groove.

Since the airbag-breaking-groove forming device 100 includes the blade-edge-state detecting means 129, a distance between the blade edge of the machining blade and the placement surface of the support table 111 can be maintained at a predetermined state in consideration of the state of an edge face of the machining blade. Further, even though the type, thickness, or the like of the skin is changed, the airbag-breaking-groove forming device can quickly form an airbag breaking groove, of which the thickness of the remaining portion is uniform as a whole, with high accuracy.

### (2)-6 Materials

Furthermore, materials of the machining device are not particularly limited, but it is preferable that at least the cylindrical body and the transfer passage are made of a titanium compound (also including titanium metal) as a main ingredient.

The reason for this is as follows: since the weight of a main drive unit of the machining device is reduced when the material of each of the cylindrical body and the transfer passage is the titanium compound, machining accuracy is significantly improved. Further, since mechanical strength and the like are significantly improved, the life of the machining device may be significantly lengthened.

Furthermore, when the cylindrical body and the transfer passage are made of a titanium compound, the cylindrical body and the transfer passage have a low charging property and are excellent in workability. Accordingly, it is possible to easily form the cylindrical body and the transfer passage in a predetermined form by, for example, welding.

On the other hand, there is a problem in that a titanium compound is generally expensive. However, since the above-mentioned effect is obtained and durability, corrosion resistance, and the like are significantly improved beyond the problem, it may be said that a titanium compound is rather an inexpensive material from a long-term viewpoint.

Meanwhile, aluminum, iron, and the like have been mainly used in the related art as the materials of the cylindrical body and the transfer passage. However, when aluminum or iron is used, an oxide film is likely to be formed on the surfaces of the cylindrical body and the transfer passage and the cylindrical body and the transfer passage are poor in workability (weldability) and are easily charged. For this reason, there is a new problem in that fine waste easily adheres to the inner surfaces of the cylindrical body and the transfer passage. When iron is used, it is difficult to reduce weight and there is a problem in terms of a corrosive property and the like.

### (3) Workpiece

Further, the type of a workpiece (simply, also referred to as a base) is also not particularly limited. However, example of the workpiece includes a three-dimensional molding, a film, and the like made of a synthetic resin, such as a polyethylene resin, a polypropylene resin, a polystyrene resin, a polyester resin, a polycarbonate resin, a polyurethane resin, a polyamide resin, a polyvinyl chloride resin, or a polysulphone resin; metal (including an alloy), such as gold, silver, copper, platinum, nickel, titanium, aluminum, zinc, iron, lead, cadmium, tungsten, indium, or molybdenum; an oxide, such as a silver oxide, a copper oxide, a silicon oxide, a nickel oxide, a titanium oxide, an aluminum oxide, a zinc oxide, an iron oxide, a lead oxide, a cadmium oxide, a tungsten oxide, an indium oxide, a molybdenum oxide, or a glass, ceramic; a hydroxide such as an aluminium hydroxide; a ceramic material; and a complex or a mixture thereof.

When predetermined machining is performed on a workpiece made of these synthetic resins, metal oxides, and the like, a large amount of waste is generated but the workpiece is easily charged and the size of a workpiece to be obtained is considerably large.

Accordingly, if generated waste remains when the machining state of the workpiece is measured by an optical measurement method or the like, the generated waste serves as a measurement hindrance factor. For this reason, it is difficult to manage the machining state of the workpiece. For this reason, even though a predetermined air flow is generated, it is important to quickly and sufficiently suck and remove waste at the same time with the generation of the waste as in the invention.

Meanwhile, when an airbag-breaking-groove forming device is assumed as the machining device, the base 15, which has a single-layer structure and forms the automotive interior member (airbag door member) 40 illustrated in Fig. 5(a), or the base 15', which forms an automotive interior member (airbag door member) 40' illustrated in Fig. 5(b), is used as a workpiece.

### (4) Waste

Further, waste, which is generated from the workpiece due to machining, changes depending on the type or aspect of the workpiece, the type or aspect of the machining device, or the like. Typically, examples of the waste include cutting chip, cutting scrap, polishing chip, polishing scrap, boring chip, boring scrap, and the like.

Accordingly, when an airbag-breaking-groove forming device is assumed as the machining device, specifically, examples of waste generated from a workpiece include pieces that are made of a polypropylene resin, a polyurethane resin, a polyvinyl chloride resin, and the like and have a circular shape, an elliptical shape, a polygonal shape, a deformed shape, the shape of a ribbon, and the like.

Furthermore, when the waste is recovered by the waste recovery device, it is preferable that the average particle size (an equivalent circle diameter or a sphere equivalent diameter) of the waste is set to a value within the range of 0.01 to 8 mm.

The reason for this is that the conveyance of the waste in the transfer passage may deteriorate, an antistatic property may deteriorate due to the supply of a predetermined amount of moisture, or the handleability of a recovery tank may deteriorate when the average particle size of the waste has a value smaller than 0.01 mm.

Meanwhile, the reason for this is that the conveyance of the waste may deteriorate likewise, it is difficult for the waste to pass through a moisture supply device such as a venturi tube, or an antistatic property may deteriorate due to the supply of a predetermined amount of moisture when the average particle size of the waste exceeds 8 mm.

Accordingly, the average particle size of the waste is more preferably set to a value within the range of 0.1 to 5 mm, and is still more preferably set to a value within the range of 0.5 to 2 mm.

Meanwhile, since the air-blowing device is provided in the invention, the waste does not remain in the formed groove and the recovery efficiency of the waste in the cyclone can be improved even though waste is ultrafine waste having a particle size of 0.01 mm, 0.1 mm, or 0.5 mm.

Meanwhile, it is possible to adjust the average particle size of the waste to a value within a predetermined range by appropriately controlling machining conditions or the like.

Further, the average particle size of the waste is an average particle size that is measured according to JIS Z 8901, and is defined as an equivalent circle diameter obtained from a microscopy, a sphere equivalent diameter obtained from a light scattering method, a sphere equivalent diameter obtained from an electrical resistance method, or the like.

More specifically, the average particle size of the waste are measured by a particle counter using a laser method, an image processing method using a photomicrograph, or known means, such as vernier calipers, and can be calculated as an arithmetic mean of the particle diameters.

### 2. Waste recovery device

### (1) Transfer passage

As illustrated in Figs. 1 and 2, the transfer passage 14 is a passage that transfers waste by using an air flow, and is generally formed of a pipe-shaped member or a bellows-shaped member having a circular cross-sectional shape.

However, in order to smoothly transfer a large amount of waste, which has a considerably large size, in a short time, the diameter of the transfer passage is preferably set within the range of 1 to 80 mm, is more preferably within the range of 5 to 40 mm, and is still more preferably set within the range of 10 to 20 mm.

### (2) Moisture supply device

As illustrated in Fig. 3, a moisture supply device 16, which is provided in the charge processing section denoted by reference character B, is a device that is provided on the transfer passage 14 including a linear portion or a curved portion and supplies a predetermined amount of moisture to the waste to be transmitted together with an air flow.

Examples of the moisture supply device 16 include a venturi tube, a T tube, an electrothermal vapor supply device, a spray device, a mist supply device, an ultrasonic vapor supply device, a titration device, and the like.

More specifically, when the moisture supply device includes a venturi tube and a water introduction tube for supplying water to the venturi tube, it is preferable that the moisture supply device supplies a predetermined amount of moisture to waste in the form of spray from the tip of the water introduction tube by using negative pressure that is generated while an air flow passes through the narrowest portion of the venturi tube.

Here, the diameter (φ1) of a portion of the transfer passage, which is positioned on the front side of the venturi tube, is within the range of, for example, 8 to 12 mm; the diameter (φ2) of the narrowest portion of the venturi tube is within the range of, for example, 3 to 7 mm; and the diameter (φ3) of a portion of the transfer passage, which is positioned on the back side of the venturi tube, is within the range of, for example, 8 to 12 mm.

Further, it is also preferable that the moisture supply device is a T tube provided on the transfer passage. That is, the T tube is a device that forcibly supplies a predetermined amount of moisture from a tube provided in T shape at a joint portion of the transfer passage to perform predetermined antistatic treatment of waste.

Furthermore, since a valve is generally provided on the tube, the amount of moisture to be supplied from the T tube is adjusted.

Meanwhile, in the case of the T tube, the diameter of the transfer passage does not substantially affect the amount of moisture to be supplied. Accordingly, there is an advantage that a concern about the clogging of the transfer passage is less even though the amount of waste is considerably larger than that of other moisture supply devices.

Further, it is also preferable that the moisture supply device is an electrothermal vapor supply device. That is, the electrothermal vapor supply device is a device that includes a vapor generator provided on the transfer passage and including a heater, supplies a predetermined amount of water to the vapor generator through a tube, and forcibly supplies a predetermined amount of moisture from the surface of the vapor generator.

Since the electrothermal vapor supply device includes a vapor generator that has an area larger than that of other moisture supply device, there is an advantage that the electrothermal vapor supply device can more uniformly and reliably perform antistatic treatment regardless of the velocity of the air flow.

Meanwhile, it is also preferable that a mixing unit as a part of the moisture supply device is further provided on the transfer passage so as to be capable of mixing and adding water to waste.

That is, it is also preferable that a small chamber, a baffle, or the like as a mixing unit is provided at a joint portion between the venturi tube, the T tube, the spray device, or the like and an introduction tube or on the downstream side of joint portions between these devices and the introduction tube to supply water to waste.

Further, when the mixing unit is further provided with a mixer, such as a stirrer or an ultrasonic vibrator, water can be uniformly supplied to waste.

Furthermore, it is preferable that a valve (an electromagnetic valve or a manual valve) 16b is provided on a water introduction tube 16a connected to the moisture supply device 16 or on an water introduction tube 16a connected between the moisture supply device 16 and a water tank 16c supplying water to the moisture supply device 16 as illustrated in Figs. 2 and 3.

The reason for this is that antistatic treatment may be efficiently performed even though the amount of moisture is relatively small since the amount of moisture to be supplied by the moisture supply device may be controlled with higher accuracy by this structure.

Further, the reason for this is as follows: since the valve is provided, a predetermined amount of water may be previously stored in the water introduction tube or the like supplying water to, for example, the venturi tube. Accordingly, the stored water may be quickly supplied to waste to perform predetermined antistatic treatment.

### (3) Cyclone

As illustrated in Fig. 2, the cyclone 18 is a device for separating the waste 17, which has been subjected to antistatic treatment, by a centrifugal force.

More specifically, the cyclone 18 includes a cylindrical portion 18a that is positioned on the upper side, a conical portion 18b of which the diameter is reduced toward the lower side, an air discharge tube 18e in which a cyclone flow is easily generated and which is used to discharge air from which waste has been separated to the outside, and a blower 20 that is provided at an end of the air discharge tube 18e and generates a predetermined air flow.

Further, the cyclone 18 of Fig. 2 is placed on a recovery tank 24 to be described below while being fixed by reinforcing members 18d so as to be supported in an obliquely downward direction.

Accordingly, as a preferred aspect of the cyclone, generally, the diameter of the cylindrical portion is within the range of 100 to 1000 mm, the height of the cylindrical portion is within the range of 100 to 800 mm, the diameter of the tip (the lowest portion) of the conical portion is within the range of 50 to 500 mm, and the height of the conical portion is within the range of 200 to 2000 mm.

That is, since the waste subjected to antistatic treatment is rotationally moved by a cyclone flow that is generated by the operation of the blower, a predetermined centrifugal force is applied. Accordingly, the waste is likely to adhere to the inner wall of the cylindrical portion or the conical portion. Further, when the amount of waste adhering to the inner wall is increased with time, the waste forms a predetermined lump. The lump falls by its own weight and is collected at a lower portion of the conical portion.

In this case, since waste not subjected to antistatic treatment adheres to the inner wall of the cylindrical portion or the conical portion for a long time, long time is required until the waste not subjected to antistatic treatment falls to the lower portion of the conical portion by its own weight.

In contrast, since the weight of the waste, which has been subjected to antistatic treatment as in the invention, is increased due to added water, a centrifugal force to be generated is increased and time, which is taken while the waste adheres to the inner wall of the cylindrical portion or the conical portion, is considerably shortened. As a result, the waste can be quickly collected at the lower portion of the conical portion.

### (4) Recovery tank

As illustrated in Fig. 2, the recovery tank 24 is a device that is used to recover the waste separated by the cyclone 18.

More specifically, the recovery tank is a substantially cylindrical container. As a preferred aspect of the recovery tank, the diameter of the recovery tank is within the range of 300 to 2000 mm and the height of the recovery tank is within the range of 300 to 2000 mm.

Meanwhile, since the recovery tank 24 also includes a conical portion 26 of which the diameter is reduced toward the lower side as in the cyclone, waste is more easily recovered.

Further, since the waste not subjected to antistatic treatment selectively adheres to the inner wall of the recovery tank due to static electricity, a clear view is not secured even though a transparent window to be described below is provided. For this reason, there is a problem in that it is not possible to grasp the amount of waste to be recovered and to easily take out the waste even though trying to take out the waste to the outside out of the recovery tank.

In contrast, since the waste, which has been subjected to antistatic treatment as in the invention, is uniformly deposited on the entire inner portion of the recovery tank, all the waste of the recovery tank can be effectively used. Moreover, since the transparent window to be described below is provided, it is possible to visually confirm the amount or the recovery state of waste to be recovered and it is also easy to take out the waste to the outside.

In addition, when the above-mentioned recovery tank 24 is defined as a first recovery section, it is preferable that a second recovery section 30, which is used to recover waste and is protected by a frame 32 moved up and down by a jack 26, is provided below the first recovery section as illustrated in Fig. 2.

Further, it is preferable that a recovery bag, a recovery box, or the like is provided in the second recovery section 30 and the waste falling by its own weight is integrally recovered by the recovery bag 30, the recovery box, or the like.

The reason for this is that a predetermined amount of waste may be integrally and quickly recovered by a simple structure according to this structure.

### [Second embodiment]

A second embodiment is a workpiece machining method using a machining device that performs predetermined machining of a workpiece by a machining tool housed in a cylindrical body. In the machining device, a scatter-preventing member coming into contact with the workpiece without a gap therebetween during the predetermined machining is disposed at the tip of the cylindrical body, a transfer passage for sucking in the waste of the workpiece produced during the predetermined machining is provided on a side surface of the cylindrical body, and an air outlet that is used to blow air to at least the tip of the machining tool is provided on the side surface of the cylindrical body at a symmetrical position toward a machining tool(device). The workpiece machining method includes the following steps (1) and (2).
(1) A step of machining the workpiece by using the machining device while blowing air to at least the tip of the machining tool from the air outlet and sucking and removing the waste through a transfer passage(suction passage)
(2) A step of measuring a machining depth of the workpiece, which is machined by the machining tool, by a sensor

The workpiece machining method of the second embodiment will be described using a method of forming an airbag breaking groove as an example.

### 1. Step (1)

The step (1) is a step of performing the machining of the workpiece while blowing air to at least the tip of the machining tool from the air outlet by using the predetermined machining device and sucking and removing the waste of the workpiece.

That is, as illustrated in Fig. 1, the step (1) is a step of further continuously performing the machining of the workpiece 15 while sucking and removing the waste of the workpiece 15 that is generated due to the machining performed using the predetermined machining device 12.

Here, in order to quickly and sufficiently suck in the waste of the workpiece, it is preferable that the velocity of an air flow used to suck and remove the waste is set to a value within the range of 50 to 2000 m/min.

However, in order to quickly and sufficiently suck in the waste of the workpiece while performing the predetermined machining, it is preferable that the scatter-preventing member (cushion member) 12c formed of a bellows member is further provided around the machining tool (an end mill or the like) 12a at the tip of a cylindrical body (cylindrical cover) 12b to which a suction passage 14 as a suction-removal portion is connected as illustrated in Fig. 1.

The reason for this is that the generated waste may be intensively sucked without being scattered to the periphery since negative pressure is generated when the cylindrical body 12b is provided and internal air is sucked by the suction passage 14.

Further, the machining tool 12a needs to be quickly moved relative to the workpiece, but the cylindrical body 12b, which includes the scatter-preventing member 12c formed of a bellows member and provided at the tip thereof, is appropriately flexibly deformed only in a vertical direction. The reason for this is that a concern about the hindrance to the movement of the machining tool is less.

In addition, if the scatter-preventing member is made of a resin containing an antistatic agent, the frictional charging of the scatter-preventing member can be effectively prevented.

Accordingly, it is preferable that the volume resistivity of the scatter-preventing member is set to a value within the range of 1×10² to 1×10¹⁰ Ohm/cm.

The reason for this is that it is possible to effectively prevent a phenomenon in which fine waste easily adheres to the inner surface of the scatter-preventing member since it is possible to effectively prevent frictional charging by forming the cylindrical body (cylindrical cover) in consideration of a material as described above.

Further, it is preferable that the suction passage 14 as a suction-removal portion is connected to the cylindrical body 12b so as to be inclined with respect to the vertical direction by a predetermined angle (θ1) as illustrated in Fig. 1.

More specifically, an angle (θ1) between the center line of the suction passage 14 and the vertical direction is preferably set to a value within the range of 10 to 80°, is more preferably set to a value within the range of 20 to 70°, and is still more preferably set to a value within the range of 30 to 60°.

The reason for this is that a dead space in the cylindrical body is reduced and the generated waste may be more quickly and sufficiently sucked since the suction passage inclined in such an oblique direction is provided.

### 2. Step (2)

Next, the step (2) is a step of measuring a machining depth of the workpiece, which is machined by the machining tool, by a predetermined sensor.

That is, the step (2) is a step of measuring the depth of a groove, which is to be broken and is formed on the back of the workpiece, or the thickness of the remaining portion of the workpiece.

Here, a method of measuring the thickness, that is, the depth of the remaining portion of a line to be broken is not particularly limited. However, it is preferable that, for example, a laser beam measurement system, an infrared measurement system, or an eddy current system is employed.

More specifically, the depth of the line to be broken (or the thickness of the remaining portion) is preferably measured on at least two positions and more preferably measured at three or more positions by using the reflection of a laser beam or the like or eddy current.

The reason for this is to obtain an average numerical value by measuring the thickness at a plurality of positions as described above even though the thickness of the molded skin is slightly uneven.

Accordingly, it is possible to form a line to be broken that has a uniform thickness as a whole. For this reason, when a force for expanding an airbag is generated, an airbag door can be reliably opened along the line to be broken.

Meanwhile, it is preferable that the thickness of the molded skin is measured even in a step before a step of forming a line (groove) to be broken on the skin of a workpiece.

The reason for this is as follows: since it is possible to form a line to be broken that has a more uniform thickness as a whole by measuring the thickness of a workpiece as described above before and after the formation of a line to be broken, an airbag door can be more reliably opened along the line to be broken when a force for expanding an airbag is generated.

### 3. Another step 1

Another step 1 is a step of transferring waste to the cyclone 18 from the machining tool 12a through the moisture supply device 16 in the transfer passage 14 illustrated in Fig. 2 by using a predetermined air flow. Generally, another step 1 is simultaneously performed while the above-mentioned step (1) is performed.

Here, it is preferable that the velocity of the air flow used to transfer the waste in the transfer passage 14 illustrated in Fig. 2 is set to a value within the range of 50 to 2000 m/min.

The reason for this is that it may be difficult to reliably suck in a large amount of waste and to smoothly transfer the large amount of waste when the velocity of the air flow has a value lower than 50 m/min.

Further, the reason for this is that it may be difficult to reliably perform the antistatic treatment of a large amount of waste, which has a considerably large size, when the velocity of the air flow has a value exceeding 2000 m/min. Accordingly, the velocity of the air flow in the transfer passage is more preferably set to a value within the range of 100 to 1000 m/min and is still more preferably set to a value within the range of 300 to 800 m/min.

Meanwhile, in order to accurately control the velocity of the air flow in the transfer passage to a value within a predetermined range, it is preferable to appropriately adjust the capacity or displacement of a blower for generating an air flow or to provide a current meter, a flowmeter, or a pressure gauge at a predetermined position in the transfer passage.

### 4. Another step 2

Next, another step 2 is a step of performing antistatic treatment, which supplies a predetermined amount of moisture to the waste, by the moisture supply device 16 that is provided on the transfer passage 14 illustrated in Figs. 1 and 2.

Here, generally, since the volume resistivity of the waste, which is not yet subjected to the antistatic treatment, has a value exceeding 1×10⁸ Ω·cm, there is a problem in that the waste not yet subjected to the antistatic treatment easily adheres to the inner wall of the cyclone or the inner wall of the recovery tank due to static electricity.

In contrast, it is preferable to set the volume resistivity of the waste to a value of 1×10⁶ Ω·cm or less by performing predetermined antistatic treatment of the waste.

The reason for this is that it is possible to quantitatively manage the degree of the antistatic treatment of the waste or the amount of moisture to be supplied by quantitatively performing antistatic treatment as described above.

That is, since the generation of static electricity is significantly suppressed when the volume resistivity of the waste subjected to antistatic treatment is set to a value of 1×10⁶ Ω·cm or less, it is possible to effectively prevent the waste from adhering to the inner wall of the cyclone or the inner wall of the recovery tank. Accordingly, the recovery efficiency of the waste can be improved.

However, when trying to excessively reduce the volume resistivity of the waste, there is a case in which the amount of moisture to be supplied becomes excessively large or time required for antistatic treatment is excessively lengthened.

Accordingly, it is preferable to more preferably set the volume resistivity of the waste, which has been subjected to antistatic treatment, to a value within the range of 1×10° to 1×10⁵ Ω·cm and to still more preferably set the volume resistivity of the waste, which has been subjected to antistatic treatment, to a value within the range of 1×10¹ to 1×10⁴ by performing the predetermined antistatic treatment of the waste.

Meanwhile, the value of the volume resistivity of the waste can also be measured at positions on the front and rear of the transfer passage, which performs the antistatic treatment, through the appropriate sampling of the waste. However, it is preferable to measure the value of the volume resistivity of the waste, which is not yet subjected to the antistatic treatment, and the value of the volume resistivity of the waste, which has been subjected to the antistatic treatment, by providing volume resistivity measuring devices at positions on the front and rear of the transfer passage, which performs the antistatic treatment, in order to more quickly and simply perform control.

Further, it is preferable that the amount of moisture to be supplied is set to a value within the range of 0.001 to 500 g per unit volume (m³) of the air flow including the waste when antistatic treatment is performed by using the moisture supply device.

The reason for this is that it may be difficult to simply and efficiently recover the waste since the antistatic treatment of the waste is insufficient when the amount of moisture has a value smaller than 0.001 g.

The reason for this is that it may be difficult to simply and efficiently recover the waste since the amount of moisture contained in the waste becomes excessively large and the waste is present in the form of slurry when the amount of moisture has a value exceeding 500 g.

Accordingly, the amount of moisture to be supplied is more preferably set to a value within the range of 0.005 to 100 g, is still more preferably set to a value within the range of 0.01 to 50 g, and is most preferably set to a value within the range of 0.05 to 10 g, per unit volume (m³) of the air flow including the waste.

Further, it is preferable that the supply of moisture (antistatic treatment) is performed in synchronization with machining performed by a predetermined machining device when antistatic treatment is performed by the moisture supply device.

That is, it is preferable that the antistatic treatment of the waste is performed together with machining performed by the predetermined machining device.

The reason for this is that the accuracy of the machining of the machining device may be improved by predetermined suction and moisture may be efficiently supplied when antistatic treatment and machining are performed in this way. That is, the reason for this is that it may be difficult to simply and efficiently recover the waste since surplus moisture is present in the recovery tank and waste is present in the form of slurry when moisture is always supplied.

### 5. Another step 3

Next, another step 3 is a step of separating the waste, which has been subjected to antistatic treatment, by using a centrifugal force generated in the waste, which has been subjected to antistatic treatment, by the cyclone 18 illustrated in Figs. 1 and 2.

Here, another step 3 is generally performed after another step 1 and another step 2 having been described above are performed while the above-mentioned step (1) is performed.

Accordingly, when the waste subjected to antistatic treatment is rotationally moved by a cyclone flow that is generated by the operation of the blower, a predetermined centrifugal force is generated. Further, since the weight of the waste, which has been subjected to antistatic treatment by the supply of a predetermined amount of moisture, is increased due to supplied water, a centrifugal force to be generated is increased and time, which is taken while the waste adheres to the inner wall of the cylindrical portion or the conical portion, is considerably shortened. As a result, the waste can be quickly collected at the lower portion of the conical portion.

In contrast, when the waste is not subjected to antistatic treatment, the waste is rotationally moved by the cyclone flow but easily adheres to the inner wall of the cyclone since static electricity is easily generated. Further, since time, which is taken while the waste not subjected to antistatic treatment adheres to the inner wall, is considerably lengthened, long time is required until the waste not subjected to antistatic treatment falls to the lower portion of the conical portion by its own weight.

Meanwhile, the magnitude or the like of the cyclone flow, which is generated in the cyclone, is not particularly limited. However, it is sufficient to use a combination of the cyclone having the aspect described in the first embodiment and, for example, a blower that has the amount of discharged air within the range of 0.01 to 100 m³/min and discharge pressure within the range of 0.1 to 100 kPa under a rated condition of a three-phase voltage of 200 V.

### 6. Another step 4

Next, another step 4 is a step of receiving the waste, which is separated by the cyclone 18, to the recovery tank 24 as illustrated in Fig. 1.

Here, another step 4 is performed after another step 1, another step 2, and another step 3 having been described above are performed while the above-mentioned step (1) is performed.

That is, since the waste, which has been subjected to antistatic treatment, is uniformly deposited on the entire inner portion of the recovery tank, all the waste of the recovery tank can be effectively used. Moreover, since the above-mentioned transparent window is provided, it is possible to visually confirm the amount or the recovery state of waste to be recovered and it is also easy to take out the waste to the outside.

In contrast, since the waste not subjected to antistatic treatment selectively adheres to the inner wall of the recovery tank due to static electricity to be generated, a clear view is not secured even though the transparent window to be described below is provided. For this reason, it is not possible to grasp the amount of waste to be recovered.

Moreover, since the waste is stayed in the recovery tank or easily adheres to the operator's hand even though trying to take out the waste to the outside out of the recovery tank, there is a problem in that waste is not easily taken out.

### [Examples]

### [Example 1]

### 1. Formation of airbag breaking groove

The airbag-breaking-groove forming device 100 illustrated in Fig. 6, which includes the machining device (machining tool: end mill) 12 provided with a predetermined waste recovery device 10 including the moisture supply device 16 as an antistatic treatment device as illustrated in Figs. 1 and 2, was prepared.

In this case, a linear distance or hight position (L1) between the surface of an airbag base (carbon-containing hard polypropylene resin), which has a thickness of 3 mm, and the height position of the air outlet was set to 10 mm; a linear distance or hight position (L2) between the surface of the airbag base and the lower limit height position of the scatter-preventing member was set to 18 mm; a linear distance or hight position (L3) between the surface of the airbag base and the height position of the lower surface of a chuck for a workpiece was set to 20 mm; and a linear distance or hight position (L4) between the surface of the airbag base and the upper limit height position of the scatter-preventing member was set to 30 mm.

Moreover, the angle (θ3) between the virtual center line (M1) of the air-blowing device, which is mounted on the side surface of the cylindrical body, and the virtual center line (M2) of the machining tool was set to 25°, and the angle (θ2) between the virtual center line (M1) of the air-blowing device, which is mounted on the side surface of the cylindrical body, and the virtual extension line (M3) of the workpiece was set to 65°.

Meanwhile, it was confirmed that environmental temperature, which is the ambient temperature of the airbag-breaking-groove forming device 100, was 40°C.

Then, cooling air, which has an pressure of 1000 kPa and a velocity of flow of 2000 m/min, for the end mill was blown from the air-blowing device including an air outlet (circular shape) having a diameter of 0.8 mm; and a blower connected to the cyclone was operated so that waste to be generated could be sucked and removed by an air flow having a velocity of 40 m/min.

After that, while a state in which the cooling air was blown and the waste was sucked and removed was maintained, the end mill mounted on the robot arm was driven to form a total of 30 airbag breaking grooves (dashed lines having a length of 5 cm and an interval of 0.5 cm), each of which have a depth of 1.5 mm, a width of 5 mm, and a length of 50 cm, on a test airbag base that is made of a black pigment-containing polypropylene resin and has a thickness of 3.0 mm.

Accordingly, while a plurality of airbag bases 15 having a single-layer structure illustrated in Fig. 5(a) were sequentially exchanged, predetermined airbag breaking grooves 15d were continuously formed for substantially 1 hour and 12 hours, respectively, by using the airbag-breaking-groove forming device 100 illustrated in Fig. 6.

### 2. Antistatic treatment

Then, as illustrated in Figs. 1 and 2, the waste (not illustrated), which had been sucked and removed, was transferred through the flexible transfer passage 14, which has a diameter of 10 mm, by an air flow having a velocity of 40 m/min.

After that, the electromagnetic valve 16b of the water introduction tube 16a was opened; and a predetermined amount (about 10 cm³) of moisture was supplied from the moisture supply device (venturi tube) 16, which was provided on the flexible transfer passage 14, for about 15 seconds so that the antistatic treatment of the waste was performed.

### 3. Recovery

Then, as illustrated in Fig. 2, waste introduced into the cyclone 18 was separated by a cyclone flow and was recovered to the transparent recovery tank 24 made of a polymethyl methacrylate resin.

### 4. Evaluation

### (1) Durability

After the airbag-breaking-groove forming device was continuously operated for 1 hour and 12 hours, the appearance of the end mill as a machining tool was observed by using an optical microscope. However, the noticeable change of the appearance of the end mill was not seen.

Further, the surface temperature of the end mill, which was not yet subjected to continuous operation, was measured by an infrared thermometer and was 40°C. Meanwhile, each of the surface temperature of the end mill, which was subjected to continuous operation for 1 hour, and the surface temperature of the end mill, which was subjected to continuous operation for 12 hours, was also 42°C. A noticeable difference in the surface temperature of the end mill was not seen.

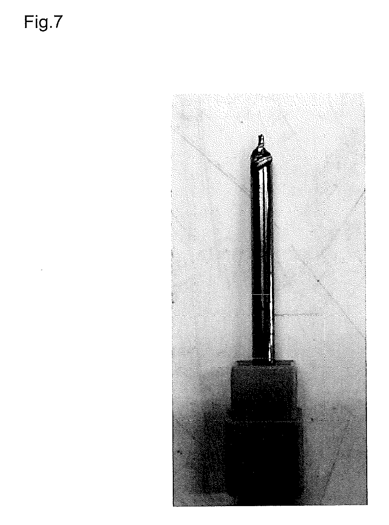

Meanwhile, Fig. 7 illustrates the outer shape of the end mill having been used.

### (2) Machining accuracy

The depth of the breaking groove (the thickness of a remaining film) was measured by using a laser displacement meter and each of the depth of the breaking groove after the operation for 1 hour and the depth of the breaking groove after the operation for 12 hours had a value within the range of 1.5 mm ± 0.2 mm. It was confirmed that very good machining accuracy was maintained.

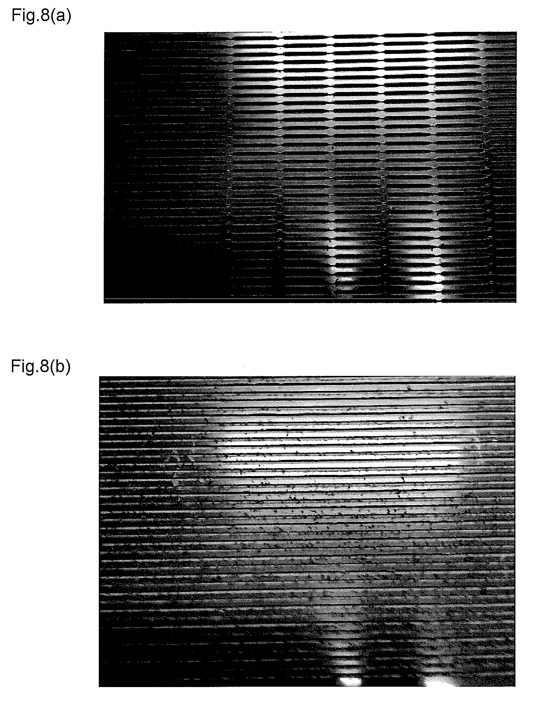

Further, the appearance of the breaking groove was observed by using an optical microscope (after operation for 1 hour), and it was confirmed that sharp cut grooves were formed on the airbag base with high accuracy as illustrated in Fig. 8(a).

Furthermore, each of the width of the breaking groove after operation for 1 hour and the width of the breaking groove after operation for 12 hours was measured by using vernier calipers, and had a value within the range of 5 mm ± 0.2 mm. Each of the length of the breaking groove after operation for 1 hour and the length of the breaking groove after operation for 12 hours was measured by using vernier calipers, and had a value within the range of 25 cm ± 0.2 cm. It was confirmed that very good machining accuracy was also maintained in terms of the width and length of the breaking groove and a sharp cut shape was formed in the observation of the appearance of the breaking groove using an optical microscope.

Meanwhile, if the depth of the breaking groove has a value within the range of 1.5 mm ± 0.5 mm, the depth of the breaking groove is within an allowable range in practice. If the width of the breaking groove has a value within the range of 5 mm ± 1.0 mm, the width of the breaking groove is within an allowable range in practice. If the length of the breaking groove has a value within the range of 25 cm ± 2.5 mm, the length of the breaking groove is within an allowable range in practice.

### (3) Antistatic treatability

It was confirmed that the waste subjected to antistatic treatment was quickly deposited on a conical bottom 26 of the transparent recovery tank 24 even after 1 hour and 12 hours without adhering to an inner wall 18c of the cyclone 18 or an inner wall 24a of the transparent recovery tank 24.

Further, it is confirmed that a worker very quickly could recover the waste as a lump to a plastic bag prepared outside without the generation of static electricity even though the worker tried to take out the deposited waste with bare hands.

Further, the volume resistivity of the waste was measured by using a digital voltmeter. It was confirmed that the volume resistivity of the waste not yet subjected to antistatic treatment had a value of 1×10⁸ Ω.cm or more and the volume resistivity of the waste subjected to antistatic treatment had a value of 1×10³ Ω·cm or less.

### [Comparative example 1]

In Comparative example 1, the airbag-breaking-groove forming device was continuously operated for 1 hour and 12 hours and formed airbag breaking grooves, and the durability of the end mill, the machining accuracy of the breaking groove, and antistatic treatability were evaluated in the same manner as Example 1 except that cooling air was not blown by the air-blowing device of Example 1.

As a result, nicks in blades of the end mill were slightly observed by an optical microscope after the airbag-breaking-groove forming device was continuously operated for 1 hour.

Furthermore, the surface temperature of the end mill, which was not yet subjected to continuous operation, was measured and was 40°C, but the surface temperature of the end mill, which was subjected to continuous operation for 1 hour, was 55°C. A noticeable difference in the surface temperature of the end mill was seen.

Further, the depth of the breaking groove (the thickness of a remaining film) was measured by using a laser displacement meter, and it was confirmed that the depth of the breaking groove after the operation for 1 hour was within the range of 1.5 mm ± 0.6 mm and the depth of the breaking groove after the operation for 24 hours was within the range of 1.5 mm ± 1.2 mm.

Furthermore, the width of the breaking groove after operation for 1 hour was measured by using vernier calipers, and it was confirmed that the width of the breaking groove after operation for 1 hour was within the range of 5.0 mm ± 0.6 mm but was changed to the range of 5.0 mm ± 1.4 mm after operation for 12 hours.

Moreover, likewise, the length of the breaking groove after operation for 1 hour and the length of the breaking groove after operation for 12 hours were measured by using vernier calipers, and it was confirmed that the length of the breaking groove after operation for 1 hour was within the range of 25 cm ± 2.6 mm but was changed to the range of 25 cm ± 5.2 mm after operation for 12 hours.

In addition, it was confirmed that a lot of unevenness caused by molten residue was generated on the airbag base in the breaking grooves, on the edges of the breaking grooves, or around the breaking grooves after operation for 1 hour as illustrated in Fig. 8(b).

Meanwhile, in regard to a charging property, substantially the same results as Example 1 were obtained even in Comparative example 1 (1×10⁸ Ω·cm was changed into 1×10⁴ Ω·cm as volume resistivity).

### [Comparative example 2]

In Comparative example 2, the airbag-breaking-groove forming device was continuously operated for 1 hour and 12 hours and formed airbag breaking grooves, and the durability of the end mill, the machining accuracy of the breaking groove, and antistatic treatability were evaluated in the same manner as Example 1 except that cooling air was not blown by the air-blowing device of Example 1 and the antistatic treatment of Example 1 was not performed.

As a result, nicks in blades of the end mill were considerably observed by an optical microscope even after the airbag-breaking-groove forming device was continuously operated for 1 hour.

Further, the surface temperature of the end mill, which was not yet subjected to continuous operation, was measured and was 40°C, but the surface temperature of the end mill, which was subjected to continuous operation for 1 hour, was 70°C. A noticeable difference in the surface temperature of the end mill was seen.

Furthermore, the depth of the breaking groove (the thickness of a remaining film) was measured by using a laser displacement meter, and it was confirmed that the depth of the breaking groove after the operation for 1 hour was within the range of 1.5 mm ± 0.8 mm but was changed to the range of 1.5 mm ± 1.4 mm after operation for 12 hours.

Moreover, the width of the breaking groove after operation for 1 hour and the width of the breaking groove after operation for 12 hours were measured by using vernier calipers, and it was confirmed that the width of the breaking groove after operation for 1 hour was within the range of 5.0 mm ± 0.7 mm but was changed to the range of 5.0 mm ± 1.8 mm after operation for 12 hours.

Further, likewise, the length of the breaking groove after operation for 1 hour and the length of the breaking groove after operation for 12 hours were measured by using vernier calipers, and it was confirmed that the length of the breaking groove after operation for 1 hour was within the range of 25 cm ± 2.8 mm but was changed to the range of 25 cm ± 6 mm after operation for 12 hours.

Furthermore, it was confirmed that a lot of unevenness caused by molten residue was generated in the breaking grooves, on the edges of the breaking grooves, or around the breaking grooves after operation for 1 hour.

In addition, since the waste not subjected to antistatic treatment adhered to the inner wall of the cyclone or the inner wall of the transparent recovery tank, it was confirmed that the inside of the cyclone or the transparent recovery tank could not be visually observed and the waste not subjected to antistatic treatment was not quickly deposited on the conical bottom of the transparent recovery tank.

Further, it was confirmed that a worker could not sufficiently recover all the waste to a bag prepared outside since static electricity was generated and the waste adhered to the hands or the inner wall even though the worker tried to take out the waste with bare hands.

Furthermore, the volume resistivity of the waste was measured by using a digital voltmeter. It was confirmed that the volume resistivity of the waste not yet subjected to antistatic treatment had a value of 1×10⁸ Ω·cm or more and the volume resistivity of the recovered waste had a high value of 1×10³ Ω·cm.

### INDUSTRIAL APPLICABILITY

According to a machining device of the invention, the machining device includes a machining tool housed in a cylindrical body. The machining device includes a scatter-preventing member and a transfer passage. The transfer passage and an air-blowing device, which cools the machining tool, are provided so as to be substantially symmetrical to each other with respect to the center line of the cylindrical body. Accordingly, even though the machining device is driven at high speed for a long time under a temperature condition where environmental temperature exceeds 40°C, the machining device can continue to smoothly perform machining without the shortening of the life of the machining tool. As a result, excellent machining accuracy can be maintained.

Meanwhile, according to a workpiece machining method using a machining device of the invention, the machining device includes a machining tool housed in a cylindrical body. The machining device includes a machining tool housed in a cylindrical body. The machining device includes a scatter-preventing member and a transfer passage. The transfer passage and an air-blowing device, which cools the machining tool, are provided so as to be substantially symmetrical to each other with respect to the center line of the cylindrical body. Accordingly, even though the machining device is driven at high speed for a long time under a temperature condition where environmental temperature exceeds 40°C, the machining device can continue to smoothly perform machining without the shortening of the life of the machining tool. As a result, excellent machining accuracy can be maintained.

Therefore, according to the invention, the simple air-blowing device is provided at a predetermined position. As a result, for example, predetermined airbag breaking grooves and the like can be quickly formed with high accuracy in the airbag-breaking-groove forming device or the airbag-breaking-groove forming method using the airbag-breaking-groove forming device.

### EXPLANATIONS OF LETTERS OR NUMERALS

10: Waste recovery device
12: Machining device
12a: Machining tool (End mill)
12b: Cylindrical body (Cylindrical cover)
12c: Scatter-preventing member (Cushion member)
12d: Cylinder
12e: Air-blowing device
12f: Outlet
13: Position control device
13d: Optical measuring device (Laser displacement meter)
14: Transfer passage(Suction passage)
15: Workpiece (Base)
15': Workpiece
15'd: Hard base
15'e: Intermediate layer
15'f: Skin
16: Moisture supply device (Venturi tube)
16a: Water introduction tube
16b: Valve
16c: Water tank
16d: Connection jig
17: Waste
18: Cyclone
18a: Cylindrical portion
18b: Conical portion
18c: Inner wall
18d: Reinforcing member
18e: Air discharge tube
20: Blower
24: Recovery tank (First recovery section)
24a: Inner wall
26: Conical portion
28: Shutter
30: Second recovery section
32: Frame
40: Airbag door member including a base having a single-layer structure
100: Airbag-breaking-groove forming device
111: Support table
111a: Placement surface
113: Machining blade
113a: Blade edge
116: Movement control unit
117: Suction hole
118: Suction device
129: State detecting means
131: Primary-break-line forming means (End mill)
133: Secondary-break-line forming means
163: Movement control robot
167: First machining-blade detecting means
169: Second machining-blade detecting means

## Claims

1. A machining device that performs predetermined machining of a workpiece by a machining tool housed in a cylindrical body, the machining device comprising:
a scatter-preventing member that is provided at a tip of the cylindrical body and comes into contact with the workpiece without a gap therebetween during the predetermined machining;
a transfer passage that is provided on a side surface of the cylindrical body and sucks in waste of the workpiece produced due to the predetermined machining; and
an air-blowing device that is provided on the side surface of the cylindrical body at a position symmetrical to the position of the transfer passage and blows air to at least a tip of the machining tool.

2. The machining device according to claim 1,
wherein the height position of the transfer passage is higher than the height position of an air outlet of the air-blowing device.

3. The machining device according to claim 1 or 2,
wherein the pressure of the air is set to a value within the range of 500 to 50000 kPa.

4. The machining device according to any one of claims 1 to 3, wherein the air outlet is provided at a tip of a syringe-shaped part that extends from the outside of the cylindrical body to the inside thereof, and
a distance between the air outlet and the tip of the machining tool is variable.

5. The machining device according to any one of claims 1 to 4, wherein the cylindrical body and the transfer passage are made of a titanium compound as a main ingredient.

6. The machining device according to any one of claims 1 to 5, wherein the scatter-preventing member is made of a resin containing an antistatic agent.

7. The machining device according to any one of claims 1 to 6, wherein the machining tool is mounted on a robot arm that changes a horizontal position and a vertical position while driving the machining tool, and
a sensor, which measures a machining depth formed by the machining tool, is mounted on the robot arm.

8. A workpiece machining method using a machining device that performs predetermined machining of a workpiece by a machining tool housed in a cylindrical body, the machining device including a scatter-preventing member that is provided at a tip of the cylindrical body and comes into contact with the workpiece without a gap therebetween during the predetermined machining, a transfer passage that is provided on a side surface of the cylindrical body and sucks in waste of the workpiece produced due to the predetermined machining, and an air-blowing device that is provided on the side surface of the cylindrical body at a position symmetrical to the position of the transfer passage and blows air to at least a tip of the machining tool, the workpiece machining method comprising:
(1) a step of machining the workpiece by using the machining device while blowing air to at least the tip of the machining tool from the air-blowing device, and sucking and removing the waste through the transfer passage; and
(2) a step of measuring a machining depth of the workpiece, which is machined by the machining tool, by a sensor.
